# EUROPÄISCHE PATENTSCHRIFT

(11) **EP 1 177 391 B1**
(45) Veröffentlichungstag und Bekanntmachung des Hinweises auf die Patenterteilung: **24.07.2002**
(21) Anmeldenummer: 00927159.4
(22) Anmeldetag: 08.05.2000
(51) Int. Cl.: F16H 3/095, F16H 57/02

(54) **ZWEIVORGELEGEWELLENGETRIEBE**
DUAL LAYSHAFT TRANSMISSION
TRANSMISSION A ARBRE DE RENVOI DOUBLE

(30) Priorität: 12.05.1999 DE 19922116
(43) Veröffentlichungstag der Anmeldung: 06.02.2002
(73) Patentinhaber: ZF FRIEDRICHSHAFEN Aktiengesellschaft, 88038 Friedrichshafen (DE)
(72) Erfinder: GNANDT, Thomas, D-88348 Saulgau (DE)
(86) Internationale Anmeldenummer: EP0004100
(87) Internationale Veröffentlichungsnummer: WO0070239

(56) Entgegenhaltungen:
- EP-A- 0 052 814
- DE-A- 3 147 853
- US-A- 4 388 838

## Beschreibung

Die vorliegende Erfindung betrifft ein Zweivorgelegewellengetriebe mit Lastausgleich für Kraftfahrzeuge mit einer axial und radial gelagerten Antriebswelle, mit einer koaxial dazu gelagerten Hauptwelle, die über eine Nebenabtriebswelle mit einer Ausgangswelle verbunden ist und mit zwei Vorgelegewellen, nach dem Oberbegriff des Anspruchs 1.

Ein derartiges Getriebe ist z.B. aus der EP-A-52814 bekannt.

Bei Getrieben dieser Art mit wenigstens zwei Vorgelegewellen wird der Lastausgleich im allgemeinen so gestaltet, dass die Antriebswelle und die Vorgelegewellen starr zum Gehäuse gelagert werden, während die Hauptwelle (bzw. Abtriebswelle) schwimmend in den auf ihr angeordneten Summenrädern, die sich im Kraftfluß befinden, gelagert sind.

So beschreibt z. B. die EP-A 43443 eine Leistungsteilung auf mehrere Vorgelegewellen mit einer radial und axial gelagerten Antriebswelle. Ein auf der Antriebswelle vorgesehenes Antriebszahnrad leitet das Drehmoment auf mit diesem kämmende und fest mit den Vorgelegewellen verbundene Zahnräder weiter. Von diesen Zahnrädern wird das Drehmoment auf der Abtriebswelle axial fixiert und radial frei beweglich angeordnete Losräder und mittels einer jeweils zugeordneten Kupplungseinrichtung auf die Abtriebswelle weitergeleitet. Diese Abtriebswelle ist dabei koaxial zur Antriebswelle schwimmend gelagert.

Bei zwei oder mehr Konstanten tritt nun das Problem auf, dass bei mehreren Antriebsrädern das nicht geschaltete Antriebsrad durch Fertigungstoleranzen ein Radialspiel benötigt. Bei Abnahme eines Drehmoment an einer Vorgelegewelle entstehen an einem schräg verzahnten Zahneingriff an der Antriebswelle radiale und axiale Kräfte. Um diese aufnehmen zu können, muß das im Kraftfluß befindliche Zahnrad zur Antriebswelle geführt werden.

Vorgelegewellengetriebe sind im allgemeinen derart ausgeführt, dass die Antriebswelle radial und axial fest geführt ist, während die Hauptwelle (d. h. Abtriebswelle) wegen des erforderlichen Lastausgleichs radial frei und nur axial fixiert ist. Für einen funktionierenden Lastausgleich sind dabei alle Losräder auf der Antriebswelle und auf der Abtriebswelle axial fixiert, radial jedoch frei.

Der notwendige Lastausgleich wird jedoch gestört, wenn ein asymmetrischer Kraftangriff auftritt. Dies ist z. B. dann der Fall, wenn ein Nebenabtrieb über nur eine Vorgelegewelle erfolgen soll.

Um ein Zweivorgelegewellengetriebe dahingehend auszugestalten, dass auch ein asymmetrischer Kraftangriff möglich ist, insbesondere bei dem auch ein Nebenabtrieb über nur eine Vorgelegewelle erfolgt, ist in der EP 683873 der Anmelderin vorgeschlagen worden, dass mindestens ein auf der Antriebswelle vorgesehenes Antriebszahnrad ein axial fixiertes und radial frei bewegliches Losrad ist, das zur Drehmomentübertragung über eine Schalteinrichtung mit der Antriebswelle gekuppelt und über eine verschiebbare Fixiereinrichtung radial festgelegt wird. Durch diese radiale Festsetzung bzw. Zentrierung des auf der Antriebswelle angeordneten Antriebszahnrades ist ein asymmetrischer Kraftangriff bzw. ein einseitiger Abtrieb über eine Vorgelegewelle möglich, ohne dass die Funktionsfähigkeit des Zahnräderwechselgetriebes beeinträchtigt wird. Da im allgemeinen zwei Antriebsräder vorhanden sind, wobei für eine Funktionsfähigkeit jedoch stets nur das geschaltete Antriebszahnrad radial fixiert werden muß, bleibt das andere Antriebszahnrad radial frei.

Ein Zweivorgelegewellengetriebe mit diesem Merkmal Lastausgleich, bei dem also ein Zahnrad zwischen den beiden Vorgelegewellen axial fixiert bei radial sehr großem Spiel angeordnet ist, welches sich bei Aufbringung einer Last von selbst zwischen den beiden Zahnrädern der Vorgelegewellen zentriert, wird von der Anmelderin unter der Bezeichnung "Astronic" gefertigt und angeboten. Bei diesem bekannten Getriebe wird derzeit die Konstante 1 bei PTO-Betrieb auf der Antriebswelle geschaltet zentriert, d. h. radial fixiert, damit der Lastausgleich durch die einseitige Momentabnahme, d. h. an nur einer der Vorgelegewellen, nicht gestört wird. Nachteilig ist hierbei noch, dass der PTO-Betrieb nur bei geschalteter Konstante 1 möglich ist.

Aufgabe der vorliegenden Erfindung ist es, ein Zweivorgelegewellengetriebe zu schaffen, welches die Abnahme eines Drehmomentes für den PTO-Betrieb ermöglicht, ohne den Lastausgleich des Zahnrades zwischen den beiden Vorgelegewellen zu stören, sodass der PTO-Betrieb nicht mehr vom geschalteten Gang abhängig ist und die Zentrierung der Konstanten entfallen kann.

Ausgehend von einem Zweivorgelegewellengetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß wird also vorgeschlagen, dass die verwendete Nebenabtriebswelle von einem eigenen Zahnrad, dem Nebenabtriebsrad, über ein Hauptwellenrad angetrieben wird, wobei die Radialkraft zwischen Nebenabtriebsrad und Hauptwellenrad durch ein Blech aufgenommen wird, welches an der Nebenabtriebswelle und an dem Hauptwellenrad gelagert ist. Wesentlich ist dabei, dass die Lagerung zwischen dem Hauptwellenrad und dem Blech erfolgt und nicht zwischen der Hauptwelle und dem Blech. Dadurch bleibt die Hauptwelle frei und kann sich wie bisher, auch wenn die anderen Hauptwellenräder geschaltet sind, zentrieren.

Die Tangentialkraft am Nebenabtriebsrad ergibt eine Komponente, die von dem Lager zwischen dem Blech und der Nebenabtriebswelle aufgenommen wird. Damit sich das Blech mit dem Nebenabtriebsrad und der Nebenabtriebswelle aufgrund der auftretenden Tangentialkraft nicht relativ zum Hauptwellenrad verschiebt, wird es vorteilhafterweise durch am Gehäuse angeordnete Stützen gehalten.

Die Nebenabtriebswelle wird in einem Lager, das eine gewisse Taumelbewegung zuläßt, am Gehäuse gelagert. Diese Taumelbewegung muß auch bei Verbindung der Nebenabtriebswelle mit dem Getriebegehäuse und der Welle vom eigentlichen Nebenabtrieb gewährleistet sein. Dadurch weist die Nebenabtriebswelle ein Verhalten auf, das ähnlich demjenigen einer Kardanwelle ist, die ein Moment überträgt und trotzdem einen gewissen Bewegungsspielraum besitzt.

Die Nebenabtriebswelle, das Nebenabtriebsrad, das Blech und das Hauptwellenrad bilden eine Einheit, die sich durch die Nebenabtriebswellenlagerung und die Stützen relativ frei bewegen kann. Damit wird es dem Hauptwellenrad ermöglicht, trotz einer Abnahme eines Drehmomentes für den Nebenabtrieb zwischen den Vorgelegewellen sich zu zentrieren.

Die Zentrierung der Konstanten entfällt also mit der erfindungsgemäßen Ausgestaltung des Zweivorgelegewellengetriebes; der PTO-Betrieb ist dadurch unabhängig vom geschalteten Gang.

Im folgenden wird die Erfindung anhand der Zeichnung näher erläutert, in der ein vorteilhaftes Ausführungsbeispiel dargestellt ist. Es zeigen:

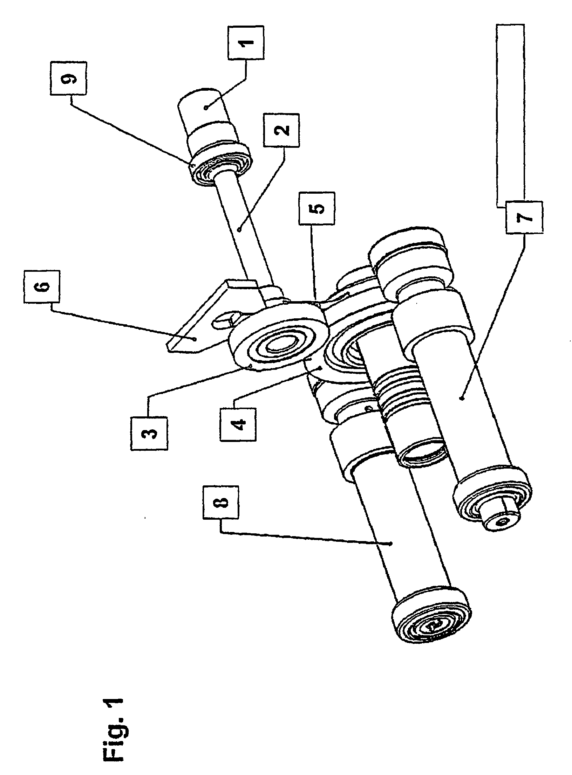

- Fig. 1: schematisch einen Teil des erfindungsgemäßen Zweivorgelegewellengetriebes,

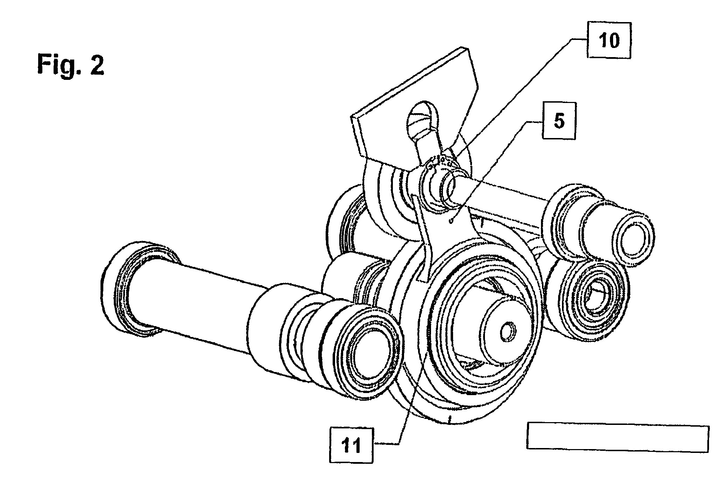

- Fig. 2: eine andere perspektivische Ansicht dieses Teils.

Zweivorgelegewellengetriebe mit Lastausgleich sind grundsätzlich dem Fachmann bekannt, samt ihrer Funktionsweise; nachfolgend sind daher nur die für das Verständnis der Erfindung wesentlichen Teile dargestellt und beschrieben.

In den Figuren, in denen gleiche Teile mit gleichen Bezugszeichen versehen sind, bedeutet 1 die Verbindung des Zweivorgelegewellengetriebes zum PTO, 2 die Nebenabtriebswelle, 3 das Nebenabtriebsrad, 4 das Hauptwellenrad, 5 ein Blech, 6 eine Stütze, 7 die erste Vorgelegewelle, 8 die zweite Vorgelegewelle, 9 das Nebenabtriebswellenlager, 10 ein Lager zwischen dem Blech 5 und der Nebenabtriebswelle 2 und 11 ein Lager zwischen dem Blech 5 und dem Hauptwellenrad 4.

Das auf der Nebenabtriebswelle 2 angeordnete zusätzliche Nebenabtriebsrad 3 kämmt mit dem auf der Hauptwelle angeordnete Hauptwellenrad 4 und wird von diesem angetrieben. Zwischen dem Nebenabtriebsrad 3 und dem Hauptwellenrad 4 ist ein Blech 5 vorgesehen, das einerseits an der Nebenabtriebswelle 2 und andererseits am Hauptwellenrad 4 gelagert ist. Dieses Blech 5 nimmt nur die Radialkraft zwischen dem Nebenabtriebsrad und dem Hauptwellenrad auf, da die Lagerung zwischen dem Hauptwellenrad und dem Blech erfolgt und nicht zwischen der Hauptwelle und dem Blech. Die Hauptwelle bleibt dadurch frei und kann sich wie bisher, auch wenn die anderen (nicht dargestellten) Hauptwellenräder geschaltet sind, zentrieren.

Das Blech 5 ist zusätzlich über eine Stütze 6 mit dem Getriebegehäuse verbunden, sodass die durch das Auftreten der Tangentialkraft am Nebenabtriebsrad gebildete Komponente von dem Lager zwischen dem Blech und der Nebenabtriebswelle aufgenommen wird. Damit bewegt sich das Blech mit dem Nebenabtriebsrad und der Nebenabtriebswelle durch diese Tangentialkraftkomponente nicht relativ zum Hauptwellenrad.

Ferner ist die Nebenabtriebswelle in einem Nebenabtriebswellenlager 9 derart gelagert, dass sie eine Taumelbewegung ausführen kann, welche auch durch die Verbindung der Nebenabtriebswelle im Getriebegehäuse mit der Welle im eigentlichen Nebenabtrieb gewährleistet wird. Dadurch weist die Nebenabtriebswelle 2 ein Verhalten ähnlich einer Kardanwelle auf, die ein Moment überträgt und trotzdem Bewegungsspielraum besitzt.

Wie bereits dargelegt, bilden Nebenabtriebswelle 2, Blech 5 und Hauptwellenrad 4 eine Einheit, die sich durch die gewählte Nebenabtriebswellenlagerung und die Stütze relativ frei bewegen kann. Dadurch ist es möglich, dass sich das Hauptwellenrad trotz einer Drehmomentabnahme für den Nebenabtrieb zwischen den beiden Vorgelegewellen 7, 8 zentrieren kann.

### Bezugszeichen

- 1: Verbindung zum PTO
- 2: Nebenabtriebswelle
- 3: Nebenabtriebsrad
- 4: Hauptwellenrad
- 5: Blech
- 6: Stütze
- 7: Vorgelegewelle
- 8: Vorgelegewelle
- 9: Nebenabtriebswellenlager
- 10: Lager zwischen Blech und Nebenabtriebswelle
- 11: Lager zwischen Blech und Hauptwellenrad

## Patentansprüche

1. Zweivorgelegewellengetriebe mit Lastausgleich für Kraftfahrzeuge, mit einer axial und radial gelagerten Antriebswelle, mit einer koaxial dazu gelagerten Hauptwelle, die über eine Nebenabtriebswelle mit einer Ausgangswelle für den PTO-Betrieb verbunden ist und mit zwei Vorgelegewellen, wobei zwischen den beiden Vorgelegewellen ein Hauptwellenrad (4) auf der Hauptwelle angeordnet ist, das sich bei Aufbringen einer Last selbsttätig zwischen den zugehörigen Zahnrädern auf den beiden Vorgelegewellen zentriert, **dadurch gekennzeichnet, dass** auf der Nebenabtriebswelle (2) ein zusätzliches Nebenabtriebszahnrad (3) angeordnet ist, das mit dem auf der Hauptwelle angeordneten Hauptwellenrad (4) kämmt und von diesem angetrieben wird und dass zwischen dem Nebenabtriebsrad (3) und dem Hauptwellenrad (4) ein Blech (5) vorgesehen ist, das einerseits an der Nebenabtriebswelle (2) und andererseits am Hauptwellenrad (4) gelagert ist.

2. Zweivorgelegewellengetriebe nach Anspruch 1, **dadurch gekennzeichnet, dass** das Blech (5) zusätzlich über eine Stütze (6) mit dem Getriebegehäuse verbunden ist.

3. Zweivorgelegewellengetriebe nach Ansprüchen 1 und 2, **dadurch gekennzeichnet, dass** die Nebenabtriebswelle in einem Nebenabtriebswellenlager (9) im Getriebegehäuse derart gelagert ist, dass sie eine Taumelbewegung durchführen kann.

## Claims

1. Dual layshaft transmission with load compensation for motor vehicles, with an axially and radially mounted drive shaft, with a main shaft which is mounted coaxially with the latter and which is connected via a power take-off shaft to an output shaft for PTO operation, and with two layshafts, wherein a main shaft wheel (4) is disposed on the main shaft between the two layshafts, which wheel is automatically centred between the associated gear wheels on the two layshafts when a load is applied, **characterised in that** an additional power take-off gear wheel (3) is disposed on the power take-off shaft (2), which gear wheel meshes with the main shaft wheel (4) disposed on the main shaft and is driven by this wheel, and that a metal plate (5) is provided between the power take-off wheel (3) and the main shaft wheel (4), which plate is mounted on one side on the power take-off shaft (2) and on the other on the main shaft wheel (4).

2. Dual layshaft transmission according to Claim 1, **characterised in that** the metal plate (5) is additionally connected to the transmission casing via a support (6).

3. Dual layshaft transmission according to Claims 1 and 2, **characterised in that** the power take-off shaft is mounted in a power take-off shaft bearing (9) in the transmission casing such that it can execute a wobbling movement.

## Revendications

1. Boîte de vitesses à deux arbres de renvoi avec répartition de charge pour véhicules automobiles, dotée d'un arbre d'entrée logé axialement et radialement, d'un arbre principal logé coaxialement par rapport à l'arbre d'entrée, qui est lié - par l'intermédiaire d'un arbre de prise de mouvement - à un arbre de sortie pour l'entraînement d'une prise de mouvement, et dotée de deux arbres de renvoi, sachant que entre les deux arbres de renvoi est disposé un pignon d'arbre principal (4) sur l'arbre principal, lequel s'aligne automatiquement entre les pignons y associés sur les deux arbres de renvoi lorsqu'une charge est appliquée, **caractérisée en ce que** sur l'arbre de la prise de mouvement (2) est logé un pignon de prise de mouvement supplémentaire (3) qui engrène avec le pignon d'arbre principal (4) disposé sur l'arbre principal et qui est entraîné par celui-ci, et **en ce que** entre le pignon de prise de mouvement (3) et le pignon d'arbre principal (4) est prévue une tôle (5), qui est logée d'un côté au niveau de l'arbre de prise de mouvement (2) et d'autre côté au niveau du pignon de l'arbre principal (4).

2. Boîte de vitesses à deux arbres de renvoi selon la revendication 1, **caractérisée en ce que** la tôle (5) est liée, en outre, par l'intermédiaire d'une plaque de support (6) au carter de la boîte de vitesses.

3. Boîte de vitesses à deux arbres de renvoi selon les revendications 1 et 2, **caractérisée en ce que** l'arbre de prise de mouvement est logé dans un palier de l'arbre de prise de mouvement (9) monté dans le carter de la boîte de vitesses de façon à ce qu'il puisse opérer un mouvement basculant.
